# EUROPÄISCHE PATENTSCHRIFT

(11) **EP 1 726 923 B1**
(45) Veröffentlichungstag und Bekanntmachung des Hinweises auf die Patenterteilung: **19.03.2014**
(21) Anmeldenummer: 06007486.1
(22) Anmeldetag: 10.04.2006
(51) Int. Cl.: G01F 23/292, G01F 23/296, A24C 5/354, B65B 19/32, B65B 57/14, A24C 5/34

(54) **Befüllungsprüfverfahren und -vorrichtung**
Filling level measurement method and device
Procédé et dispositif de mesure de remplissage

(30) Priorität: 23.05.2005 DE 102005024126
(43) Veröffentlichungstag der Anmeldung: 29.11.2006
(73) Patentinhaber: Hauni Maschinenbau AG, 21033 Hamburg (DE)
(72) Erfinder: Sacher, Dirk, 21465 Wentorf (DE); Heikens, Ralf, 21039 Börnsen (DE); Horn, Matthias, 22926 Ahrensburg (DE)
(74) Vertreter: Seemann, Ralph

(56) Entgegenhaltungen:
- DE-A1- 3 920 888
- DE-A1- 4 339 441
- DE-A1- 19 753 333
- DE-A1- 19 903 777
- GB-A- 2 289 206
- US-B1- 6 226 078

## Beschreibung

Die Erfindung betrifft ein Verfahren zur Prüfung der Befüllung eines Schragens sowie eine Befüllungsprüfvorrichtung für Schragen der Tabak verarbeitenden Industrie.

Das Handling von stabförmigen Gegenständen bzw. Artikeln in der Tabak verarbeitenden Industrie wird oftmals über Behälter bzw. Schragen realisiert. Die zunehmende Erhöhung der Produktionsgeschwindigkeit der Zigaretten- und Filterherstellmaschinen lassen immer weniger ein manuelles Handling der mit Produktstäben gefüllten Schragen zu. In der Regel wird ein Schragen mit ca. 4.000 Produktstäben gefüllt. Bei Produktionsgeschwindigkeiten von beispielsweise 16.000 hergestellten Zigaretten in der Minute kann dieses bis zu vier Schragenwechsel in einer Minute und damit eine Bewegung von jeweils bis zu vier Voll- und vier Leerschragen an einer Produktionsmaschine bedeuten. Damit hätte ein Bediener nur noch 7,5 Sekunden Zeit, den Schragentransport von Voll- und Leerschragen auszuführen.

Es kann vorkommen, dass Voll- oder Leerschragen Abfüll- oder Entleerfehler aufweisen, die beim manuellen Handling durch einen Bediener auch erkannt und beseitigt werden können. Die Nichtbeseitigung dieser Fehler würde in der Folge zu Prozessstörungen führen, wodurch ein Produktionsstopp, beispielsweise einer Zigarettenherstellmaschine, entstehen kann.

Aus der DE 199 45 808 A1 sind ein effizientes Verfahren und eine effiziente Vorrichtung zum aufeinander folgenden Entleeren von Behältern bekannt.

In US 6 226 078 B1 und in DE 197 53 333 A1 sind Vorrichtungen zur Überprüfung von Zigarettengruppen für jeweils eine Zigarettenpackung offenbart, in denen die Zigarettengruppen immer in identischer Weise angeordnet sind. Dazu werden jeweils die zusammengestellten Zigarettengruppen an einer stillstehenden optischen Prüfvorrichtung vorbeigeführt. Die Förderung der zusammengestellten Zigarettengruppen erfolgt gemäß US 6 226 078 B1 in längsaxialer Richtung der Zigaretten und gemäß DE 197 53 333 A1 in queraxialer Richtung der Zigaretten. Die Zigarettengruppen werden gemäß US 6 226 078 B1 entlang einer Oberseite aufgenommen, so dass nur die oberste Lage von Zigaretten in der Gruppe erfasst wird. Nach DE 197 53 333 A1 werden die Stirnseiten der Zigarettengruppen erfasst. Bei einer Abweichung in der Anordnung einer Zigarettengruppe von einer Sollanordnung oder beim Fehlen von Zigaretten in der Zigarettengruppe wird diese ausgeworfen.

Aus DE 39 20 888 A1 ist ein Verfahren zum Prüfen von gestapelten Zigaretten bekannt. Dabei werden Abbildungen der filterseitigen Zigarettenenden der gestapelten Zigaretten mittels einer elektrooptischen Abtasteinrichtung erzeugt und mit einem Bezugsbild verglichen, um jegliche fehlerhafte Zigarette zu ermitteln.

Aus DE 199 03 777 A1 ist ein Verfahren und eine Vorrichtung zum Detektieren und zum Beseitigen fehlerhafter und/oder fehlerhaft positionierter Zigaretten aus einem Zigarettenmagazin bekannt. Dabei wird mittels eines optischen Prüforgans wenigstens ein Bild von einer Vielzahl sich im Zigarettenmagazin befindlichen Zigaretten erfasst, von einer Bildverarbeitungseinrichtung ausgewertet und im Fall von Abweichungen des erfassten Bildes von einem Referenzbild ein Fehlersignal erzeugt.

Es ist Aufgabe der vorliegenden Erfindung, ein Verfahren zur Prüfung der Befüllung eines Schragens mit stabförmigen Artikeln der Tabak verarbeitenden Industrie und eine Befüllungsprüfvorrichtung für Schragen zur Aufnahme von stabförmigen Artikeln der Tabak verarbeitenden Industrie anzugeben, mittels der eine kontinuierliche Befüllung einer Maschine der Tabak verarbeitenden Industrie mit stabförmigen Artikeln ermöglicht ist.

Gelöst wird diese Aufgabe durch ein Verfahren zur Prüfung der Befüllung eines Schragens mit stabförmigen Artikeln der Tabak verarbeitenden Industrie, wobei die Tiefe des Schragens wenigstens so groß ist wie die Länge eines stabförmigen Artikels, wobei das Verfahren die folgenden Verfahrensschritte umfasst:
- Erfassen wenigstens einer Eigenschaft des Inhalts des Schragens und
- Vergleichen der wenigstens einen Eigenschaft mit einem, insbesondere vorgegebenen, Sollinhalt des Schragens, wobei bei einer Abweichung vom Sollinhalt, die größer ist als ein, insbesondere vorgegebener, Toleranzwert, ein Signal erzeugt wird, das einer fehlerhaften Befüllung entspricht,
das dadurch weitergebildet ist, dass die Füllhöhe des Schragens von oberhalb der Artikel erfasst wird.

Hierbei kann erfindungsgemäß eine Eigenschaft des Inhalts eines Behälters bzw. Schragens eine Befüllung mit stabförmigen Artikeln der Tabak verarbeitenden Industrie sein, die gleichmäßig Reihe für Reihe geschehen ist. Eine Eigenschaft kann auch eine gleichmäßige Tiefe der Befüllung sein bzw. eine gleichmäßige Höhe. Eine Eigenschaft kann auch sein, dass Artikel unregelmäßig befüllt werden, was im anschließenden Produktionsprozess zu Störungen führen kann. Wenn ein Signal erzeugt wird, das einer fehlerhaften Befüllung entspricht, kann der Schragen aus dem weiteren Produktionsprozess ausgeschlossen werden und anschließend beispielsweise ausgekippt werden oder von einer Bedienperson in eine ordnunggemäße Befüllung bzw. zu einem Sollinhalt des Behälters überführt werden. Eine Eigenschaft eines Inhalts eines Schragens kann es auch sein, dass kein Artikel im Behälter enthalten ist. Dieses entspricht einer vollständigen Entleerung.

Vorzugsweise wird die oberste Lage der Artikel auf querliegende Artikel geprüft bzw. die obersten Lagen. Im ersten Fall ist die Eigenschaft des Inhalts des Schragens eine gemessene Höhe der Artikel im Schragen, die mit einer Sollhöhe bzw. der Höhe eines Sollinhalts des Behälters verglichen wird. Hierbei kann die Höhe über die Breite des Schragens variieren. Im zweiten Fall ist die Eigenschaft des Inhalts des Schragens, dass die oberste Lage der Artikel gleich orientiert ist oder dass wenigstens ein Artikel quer zu dieser ansonsten gleichen Orientierung ausgerichtet ist.

Vorzugsweise wird vor der Erfassung der obersten Lage bzw. der obersten Lagen des Inhalts des Schragens der Schragen etwas gekippt. Durch Kippen des Schragens können schräg- bzw. querliegende Artikel zu der nach unten liegenden Seitenwand des Behälters rollen, so dass nur an dieser Stelle eine Erfassung der Eigenschaft des Inhalts des Schragens erfolgen muss. Das Verkippen geschieht hierbei dergestalt, dass querliegende Artikel zu einer Seitenwand des Schragens, die sich über die gesamte Breite des Schragens erstreckt, erfolgen kann.

Vorzugsweise werden aus dem Inhalt des Schragens herausstehende Artikel erfasst. Diese können im gesamten Inhalt des Schragens über die gesamte Breite und die gesamte Höhe des Schragens erfasst werden.

Ferner vorzugsweise werden im Schragen nach dem Entleeren des Schragens verbliebene Artikel erfasst.

Ein sehr schnelles Verfahren ist dann möglich, wenn mittels einer Kamera ein optisches Bild aufgenommen wird, dass mit einem Sollbild verglichen wird. Noch schneller ist die Verfahrensführung dann, wenn mittels eines Kontrastbildes eine Linienorientierung aufgenommen wird. In diesem Fall kann beispielsweise sehr schnell erkannt werden, ob ein Artikel der obersten Lage oder der zweitobersten Lage, d.h. den von oben sichtbaren Lagen, quer liegt.

Eine sehr kostengünstige Lösung ist dann möglich, wenn mittels eines Sensors, insbesondere eines Tasters, insbesondere eines Ultraschalltasters oder eines optischen Tasters, über die Breite des Schragens ein Signalmuster erfasst wird und mit einem gespeicherten Signalmuster oder einem weiteren erfassten Signalmuster verglichen wird. Das weitere Signalmuster kann durch den gleichen Taster bzw. Sensor erzeugt werden, der allerdings an einem anderen Ort, beispielsweise in der Tiefe versetzt, über die gesamte Breite des Schragens ein Signalmuster erzeugt. Es können allerdings auch weitere Sensoren bzw. Taster wie ein zweiter und ein dritter Sensor parallel in unterschiedlichen Tiefen des Schragens über die Breite Signalmuster erfassen, so dass diese miteinander verglichen werden können. Vorzugsweise handelt es sich hierbei um Laserreflextaster. Der Vergleich kann auch dadurch geschehen, dass verschiedene gemessene Signale bzw. Signalmuster verglichen oder voneinander abgezogen werden und bei einer Abweichung, die größer als ein vorgebbarer Toleranzwert ist, ein Signal erzeugt wird, das einer fehlerhaften Befüllung entspricht.

Vorzugsweise findet wenigstens ein Laserabstandssensor Verwendung. Hierzu wird Bezug genommen auf den Artikel "Optische Messverfahren im Vergleich - Abstandsmessung prinzipiell beleuchtet", Jörg Beintner, IEE, S. 58, 2002.

Insbesondere kann der Laserabstandssensor nach dem Prinzip der Laser-Triangulation funktionieren. Der Laserabstandssensor kann auch nach dem an sich bekannten Prinzip des Laser-Lichtschnitts funktionieren. Vorzugsweise finden Laserabstandssensoren der Typen LAA... der Firma di-soric Industrie-electronic GmbH & Co., D 73660 Urbach, Deutschland, Verwendung.

Vorzugsweise nimmt der Laserabstandssensor über die Breite des Schragens ein Signalmuster auf. Es handelt sich hierbei vorzugsweise um ein Höhenprofil. Wenn zwei Laserabstandssensoren vorgesehen sind, die im Wesentlichen senkrecht zur Breite des Schragens nebeneinander angeordnet sind, wobei die mit den Laserabstandssensoren zu vorgebbaren Zeiten erfassten Abstände voneinander abgezogen werden, ist eine sehr effiziente und verlässliche Verfahrensführung möglich.

Vorzugsweise werden der Sensor oder die Sensoren über die Breite des Schragens bewegt oder der Schragen bewegt sich durch einen Erfassungsbereich des Sensors oder der Sensoren. Die Bewegung ist hierbei vorzugsweise quer zur Tiefe und parallel zur Breite des Schragens. Es kann hierbei die Bewegung genutzt werden, die bei einer Befüllung oder Entleerung einer entsprechenden Maschine der Tabak verarbeitenden Industrie sowieso mit dem Schragen ausgeführt wird. Insofern wird beispielsweise Bezug genommen auf die DE 196 22 995 A1, bei der quer zur Tiefe des Schragens bzw. Behälters dieser in einen Schragencontainer bewegt wird. Bei dieser Bewegung kann entsprechend ein Signalmuster erzeugt werden.

Die Aufgabe wird ferner durch eine Befüllungsprüfvorrichtung für Schragen zur Aufnahme von stabförmigen Artikeln der Tabak verarbeitenden Industrie mit einer Vorrichtung zur Aufnahme (Aufnahmevorrichtung) wenigstens einer Eigenschaft des Inhalts des Schragens und mit einer Auswertevorrichtung gelöst, wobei die Auswertevorrichtung ausgebildet ist, um die wenigstens eine Eigenschaft des Inhalts des Schragens mit einem Sollinhalt des Schragens zu vergleichen, wobei die Auswertevorrichtung eine Signalerzeugungseinheit umfasst, die ausgebildet ist, um ein Fehlersignal zu generieren, wenn eine Abweichung vom Sollinhalt vorliegt, die größer ist als ein, insbesondere vorgebbarer, Toleranzwert, die dadurch weitergebildet ist, dass die Aufnahmevorrichtung wenigstens einen Sensor umfasst, mittels dessen entlang der Breite und/oder der Höhe des Schragens ein Signalmuster aufnehmbar ist, das mit einem gespeicherten Signalmuster oder einem zweiten von dem Sensor oder einem zweiten Sensor aufgenommenen Signalmuster in einer Auswertevorrichtung vergleichbar ist, wobei der Sensor oberhalb des Schragens angeordnet ist.

Durch die erfindungsgemäße Befüllungsprüfvorrichtung ist eine sehr effiziente Überprüfung der Befüllung eines Schragens mit stabförmigen Artikeln möglich, wodurch eine kontinuierliche Befüllung einer Maschine der Tabak verarbeitenden Industrie mit stabförmigen Artikeln ermöglicht ist. Eine Eigenschaft des Inhalts des Schragens kann eine gleichmäßige Befüllung mit stabförmigen Artikeln der Tabak verarbeitenden Industrie sein oder aber auch eine ungleichmäßige Befüllung. Hierzu wird auch auf die vorstehend genannten Eigenschaften des Inhalts eines Schragens insbesondere verwiesen. Wenn vorzugsweise als Aufnahmevorrichtung wenigstens eine Kamera zur Aufnahme wenigstens eines Abschnitts der Vorderansicht und/oder wenigstens eines Abschnitts der Draufsicht auf den Schragen bzw. den im Schragen befindlichen stabförmigen Artikeln vorgesehen ist, ist eine sehr schnelle und effiziente Überprüfung der Befüllung der Behälter möglich.

Wenn eine einzige Kamera Verwendung findet, ist eine sehr schnelle Überprüfung möglich. In diesem Fall kann mittels der Kamera je Schragen ein einziges Bild aufgenommen werden oder zwei oder mehrere Teilbilder, die jeweils ausgewertet werden können. Bei zwei oder mehreren Bildern ist es zweckmäßig, dass die Kamera oder der Schragen verfahrbar ausgestaltet ist. Es kann auch ein Array von Kameras vorgesehen sein, deren Bilder zu einem Gesamtbild zusammengefügt werden oder aber deren Bilder einzeln auf eine korrekte Befüllung der Schragen überprüft werden bzw. deren Bilder für diese Überprüfung genutzt werden können. Der Vergleich einer Eigenschaft des Inhalts des Schragens mit einem Sollinhalt des Schragens kann durch Vergleich der aufgenommenen Eigenschaft mit einer gespeicherten Eigenschaft geschehen. Dieses kann allerdings auch durch Vergleich von Strukturen in dem aufgenommenen Bild oder durch Grauwertvergleich der aufgenommenen Pixel des Bildes oder ähnliches geschehen.

Vorzugsweise umfasst die Aufnahmevorrichtung eine Fotozeile, wobei die Fotozeile und/oder der Schragen verfahrbar ist oder sind.

Eine sehr effiziente Vorrichtung ist dann gegeben, wenn der Sensor oder die Sensoren auf einem Schlitten im Wesentlichen parallel zur Breite des Schragens verfahrbar ist oder sind. Wenn der Sensor oder die Sensoren quer zur Verfahrrichtung bewegbar sind, ist eine sehr genaue Befüllungsprüfvorrichtung realisierbar. Vorzugsweise ist der Sensor ein Abstandssensor, insbesondere ein Laserabstandssensor.

Vorzugsweise ist der Sensor ein Taster, insbesondere ein Lichttaster, Laserreflextaster oder Ultraschalltaster. Ein Taster kann im Rahmen dieser Erfindung ein passives Bauelement sein, das bei spielsweise unterschiedliche Helligkeiten aufnimmt und auch ein aktives Element, das zunächst Licht oder Ultraschall aussendet und das reflektierte Licht bzw. den reflektierten Ultraschall misst.

Vorzugsweise ist der Sensor eine optische Kamera. Mittels der Kamera ist es besonders effizient und einfach möglich, eine Linienorientierung eines Kontrastbildes zu erzeugen und dieses mit einem gespeicherten Kontrastbild zu vergleichen. Eine höhere Tiefenschärfe ist dann möglich, wenn eine Beleuchtung vorgesehen ist, die schräg zur Längsachse der Artikel bzw. die schräg zur Tiefe des Schragens die oberste Lage bzw. die obersten Lagen der Artikel im Schragen beleuchtet.

Querliegende Stäbe sind besonders effektiv dann festzustellen, wenn eine Behälterkippvorrichtung vorgesehen ist.

Die Erfindung wird nachstehend ohne Beschränkung des allgemeinen Erfindungsgedankens anhand von Ausführungsbeispielen unter Bezugnahme auf die Zeichnungen beschrieben. Bezüglich aller im Text nicht näher erläuterten erfindungsgemäßen Einzelheiten wird ausdrücklich auf die Zeichnungen verwiesen. Es zeigen:
- Fig. 1: eine schematische dreidimensionale Darstellung einer erfindungsgemäßen Befüllungsprüfvorrichtung,
- Fig. 2: eine schematische dreidimensionale Darstellung des Ausschnitts aus Fig. 1,
- Fig. 3: eine schematische dreidimensionale Darstellung einer weiteren Ausführungsform einer erfindungsgemäßen Befüllungsprüfvorrichtung,
- Fig. 4: eine schematische dreidimensionale Darstellung einer weiteren erfindungsgemäßen Befüllungsprüfvorrichtung,
- Fig. 5: eine schematische dreidimensionale Darstellung eines Teils einer weiteren erfindungsgemäßen Ausführungsform,
- Fig. 6a: eine schematische Seitenansicht eines Schragens,
- Fig. 6b: eine schematische Darstellung eines Signal-über-Zeit-Diagramms,
- Fig. 6c: eine schematische Seitenansicht des Schragens aus Fig. 6a,
- Fig. 7a: eine schematische Draufsicht auf einen Teil eines Schragens,
- Fig. 7b: ein schematisches Signal über Zeitdiagramm,
- Fig. 7c: eine schematische Schnittdarstellung entlang des Schnitts A-A aus Fig. 7a,
- Fig. 8a: eine schematische Draufsicht auf einen Teil eines Schragens,
- Fig. 8b: eine schematische Darstellung eines Signal-über-Zeit-Diagramms,
- Fig. 9a: eine schematische dreidimensionale Darstellung eines entleerten Schragens,
- Fig. 9b: eine schematische Darstellung eines Signal-über-Zeit-Diagramms,
- Fig. 10: eine schematische Darstellung einer Befüllungsprüfvorrichtung, die nicht gemäß der Erfindung ist.
- Fig. 11: eine schematische Darstellung einer weiteren Befüllungsprüfvorrichtung, die nicht gemäß der Erfindung ist.
- Fig. 12: eine weitere schematische Darstellung einer weiteren Befüllungsprüfvorrichtung, die nicht gemäß der Erfindung ist.
- Fig. 13: eine weitere schematische Darstellung einer weiteren Befüllungsprüfvorrichtung, die nicht gemäß der Erfindung ist.

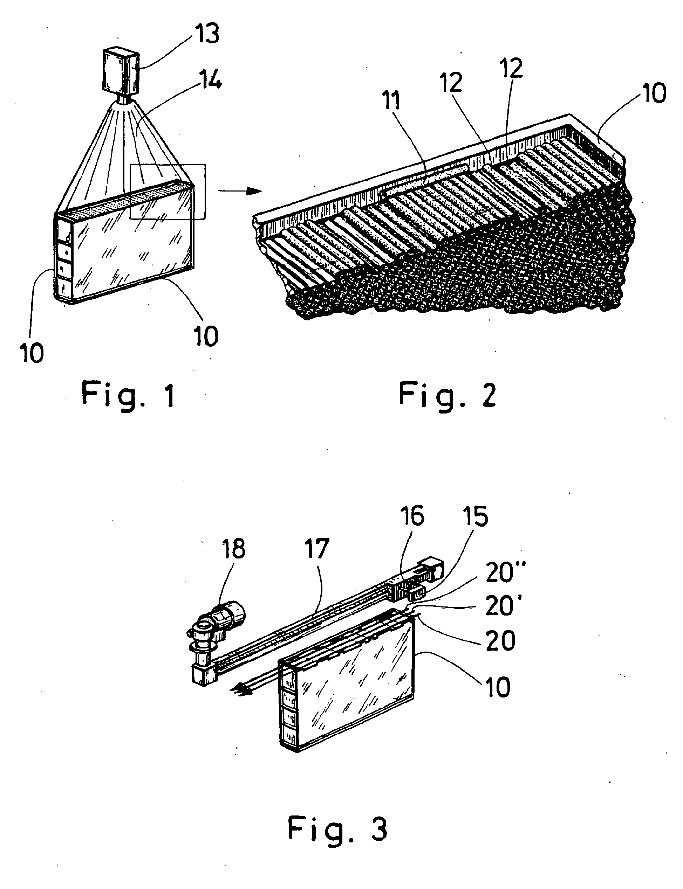

Fig. 1 zeigt eine schematische dreidimensionale Darstellung einer erfindungsgemäßen Befüllungsprüfvorrichtung in einer ersten Ausführungsform. Ein Schragen 10 ist mit Filterstäben 11, 12, die in Fig. 2 deutlicher dargestellt sind, da Fig. 2 eine Ausschnittsvergrößerung aus Fig. 1 ist, befüllt. Eine Kamera 13, die in einem Erfassungsbereich 14 eine Aufnahme der Schragenoberfläche bzw. der in dem Schragen 10 befindlichen Filterstäbe 11 und 12 macht, befindet sich oberhalb des Schragens 10. Die Auswertung der Aufnahme erfolgt über ein Programm, welches beispielsweise die Linienorientierung eines Kontrastbildes vergleicht. Befinden sich Zigaretten bzw. Filter 11, 12 in einer abweichenden Orientierung, werden sie erkannt und der Schragen 10 ist als unkonform identifiziert. Der Vorteil der erfindungsgemäßen Befüllungsprüfvorrichtung gem. Fig. 1 und 2 ist eine schnelle Auswertung sowie eine fast überall mögliche Installation in einer Maschine der Tabak verarbeitenden Industrie. Außerdem können die Werte zur Identifizierung der Unkonformität individuell angepasst werden und die Prüfung im Stillstand des Schragens 10 erfolgen.

Fig. 3 zeigt eine schematische dreidimensionale Darstellung einer weiteren Ausführungsform einer erfindungsgemäßen Befüllungsprüfvorrichtung. Auch in diesem Fall ist ein Schragen 10 mit entsprechenden stabförmigen Artikeln wie beispielsweise Filterstäbe 11 und 12 oder Zigaretten befüllt. In diesem Fall ist ein Sensor 15 vorgesehen, der die obersten Lagen des zu prüfenden Schragens 10 abtastet. Dabei bewegt sich der Sensor 15 relativ zum Schragen 10, wobei es unerheblich ist, ob sich der Schragen 10 oder der Sensor 15 bewegt. Es gibt mehrere Möglichkeiten, einen unkonformen Schragen 10 mit Hilfe von einem Sensor 15 oder mehreren Sensoren zu erkennen, wovon in Fig. 3 eine Variante dargestellt ist. Bei diesem Verfahren bewegt sich der Sensor 15 einmal oder mehrfach in versetzten Bahnen 20, 20', 20" bzw. entsprechenden Verfahrwegen 20, 20', 20" über die oberen Lagen der stabförmigen Artikel. Ein Programm, das in einer Auswerteeinheit, die nicht dargestellt ist, ausgeführt wird, vergleicht entweder die Signalmuster mit einem vorgegebenen Muster oder die Muster der versetzten Bahnen untereinander. Befinden sich die Filterstäbe 10 und 11 nicht in der gewünschten Orientierung, so weichen die Signalmuster untereinander und von dem vorgegebenen Muster ab. Der unkonforme Schragen ist bei einer Abweichung, die größer als ein vorgebbarer Toleranzwert ist, erkannt. Die Verfahrenssicherheit ist mit nur einer Bahn geringer als beim Verfahren mit mehreren Bahnen.

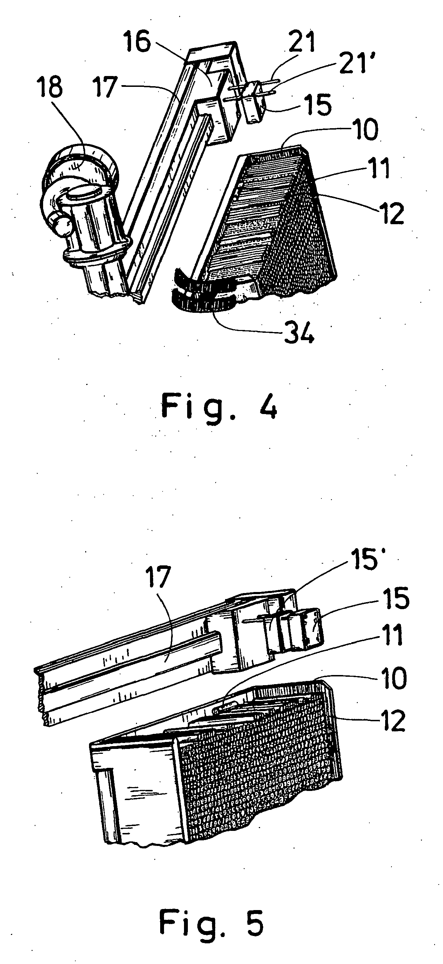

In Fig. 4 ist eine weitere erfindungsgemäße Variante einer erfindungsgemäßen Befüllungsprüfvorrichtung in schematischer dreidimensionaler Darstellung gezeigt. Auch hier wird mittels eines Motors 18 ein Schlitten 16 über eine Schiene 17 entlang der Breite des Schragens 10 verfahren. Auf dem Schlitten 16 ist ein Sensor 15 vorgesehen, der quer zur Breite des Schragens, also in der Tiefe des Schragens 10 an den Schienen 21 und 21' bewegbar gelagert ist.

Es ist außerdem eine Behälterkippvorrichtung 34 vorgesehen, mittels der der Schragen 10 entsprechend etwas verkippt werden kann, so dass der Artikel 11 an die hintere Wand des Schragens 10 rollen kann. In diesem Fall ist es lediglich notwendig, dass der Sensor 15 in einem Bereich der hinteren Wand des Schragens 10 in einer Bahn über den Schragen 10 entlang der Breite verfahren wird, so dass mittels eines Sensors und einer Bewegung der querliegende Filterstab 11 erkannt werden kann. Auch in diesem Fall kann alternativ der Schragen 10 unter einem feststehenden Sensor 15 bewegt werden. In Fig. 4 ist die Behälterkippvorrichtung nur schematisch angedeutet.

Fig. 5 zeigt eine weitere erfindungsgemäße Ausführungsform einer Befüllungsprüfvorrichtung in schematischer dreidimensionaler Darstellung, wobei im Unterschied zu Fig. 4 bzw. Fig. 3 zwei Sensoren 15 und 15' vorgesehen sind.

Bei den erfindungsgemäßen Varianten gemäß den Figuren 3 bis 5 ist eine kostengünstige Lösung realisierbar. Bei der notwendigen Relativbewegung des Sensors bzw. der Sensoren zu den Schragen kann teilweise oder vollständig die vorhandene Bewegung des Schragens in einer Maschine der Tabak verarbeitenden Industrie genutzt werden. Auch bei diesen Varianten ist eine Installation der Befüllungsprüfvorrichtung an vielen Stellen in einer entsprechenden Maschine der Tabak verarbeitenden Industrie möglich.

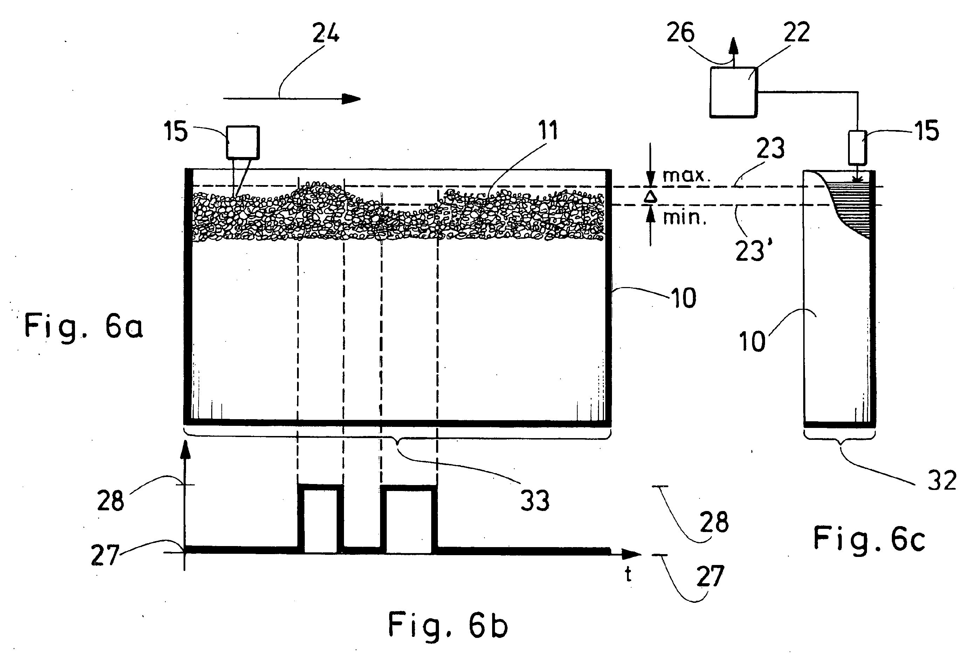

In Fig. 6a ist ein Schragen in schematischer Seitenansicht dargestellt. Es ist ferner ein Sensor 15 vorgesehen, der eine Entfernung misst. In diesem Fall wird die Höhe der Befüllung des Schragens 10 mit Filterstäben 11 gemessen. Die Höhe des Inhalts des Schragens 10 wird über dem Verfahrweg 24 über die gesamte Breite 33 gemessen. Die gestrichelten horizontalen Linien sind die maximal zulässige Höhe 23 (max.) und die minimal zulässige Höhe 23' (min.). Der Bereich dazwischen Δ ist der Toleranzbereich zwischen den Füllhöhen 23 und 23'.

In Fig. 6c ist der gleiche Schragen 10 von einer anderen Seite teilweise schematisch aufgebrochen dargestellt, und zwar über die Tiefe 32 des Schragens 10. Der Sensor 15 ist mit einem Kabel mit einer Auswertevorrichtung 22 verbunden, die ein Signal 26 erzeugt. Sollte die zulässige Füllhöhe 23 überschritten sein, wird ein Signal erzeugt, das einen Wert aufweist, der mit der Bezugsziffer 28 versehen ist, und einen Wert aufweist, der außerhalb des Toleranzbereiches bedeutet. Dieses ist in Fig. 6b schematisch durch ein Signal-über-Zeit-Diagramm dargestellt. Ein entsprechendes Signal 28 wird erzeugt, wenn die Füllhöhe unter die minimale Füllhöhe 23' fällt. Auch dieses ist in Fig. 6b dargestellt. Ansonsten ist die Füllhöhe im Toleranzbereich, also im Bereich von Δ, so dass ein Signal 27 erzeugt wird. Bei konstanter Geschwindigkeit der relativen Bewegung des Sensors 15 zum Schragen 10 kann auf den zurückgelegten Weg über die erfasste Zeit ein Rückschluss geführt werden.

Der in Fig. 6a dargestellte Schragen ist entsprechend fehlerhaft und kann zu weiteren Fehlern führen, so dass dieser aus dem Produktionsprozess ausgeschlossen werden sollte. Dieses liegt beispielsweise daran, dass bei Unterschreitung der Füllhöhe bei einer 180° Drehung des Behälters 10 zum Entleeren im Behälter 10 selbst die Produktstäbe unkontrolliert durcheinander fallen können. Hierdurch kann es geschehen, dass die Produktstäbe nicht mehr parallel angeordnet liegen, so dass eine weitere Verarbeitung und ein Weitertransport nicht mehr möglich sind.

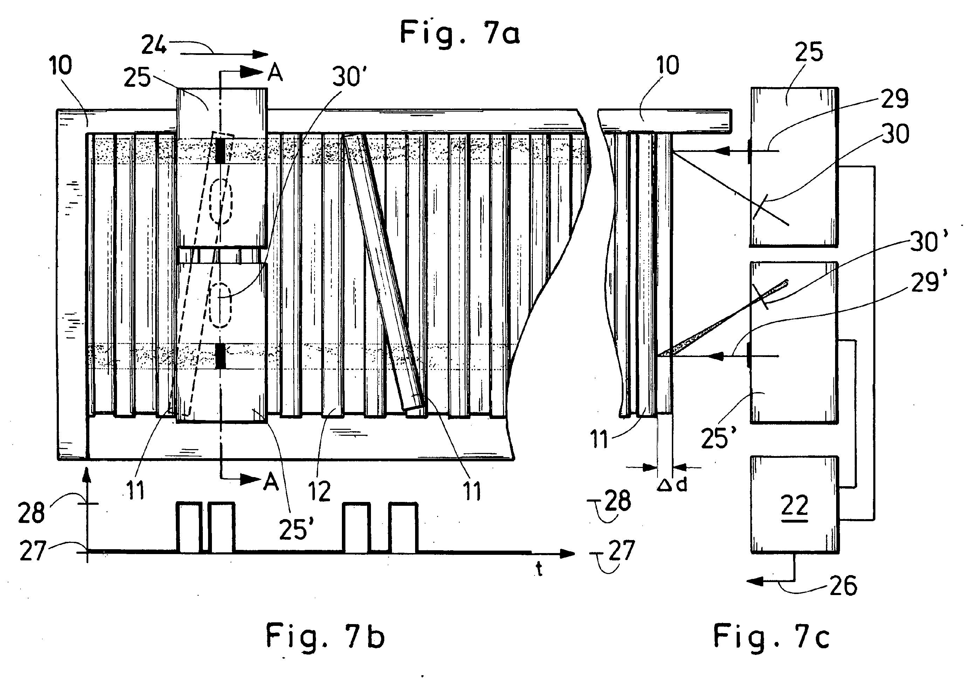

Fig. 7 zeigt in unterschiedlichen Darstellungen eine weitere erfindungsgemäße Befüllungsprüfvorrichtung. Fig. 7a ist eine Draufsicht auf einen Schragen 10, über dem ein Teil einer entsprechenden Befüllungsprüfvorrichtung angeordnet ist. In diesem Fall sind zwei Laserabstandssensoren 25 und 25' nebeneinander angeordnet, und zwar in Richtung der Tiefe des Schragens 10. Durch eine Auswerteeinheit 22, die in Fig. 7c dargestellt ist, werden die durch die Laserabstandssensoren 25 und 25' aufgenommenen Höhensignale voneinander abgezogen. Bei einer Differenz bzw. einem Differenzbetrag, der außerhalb eines Toleranzbereiches liegt, wird ein Signal 26 erzeugt, das die Bezugsziffer 28 erhält. Bei einem Simultanverfahren bzw. einer gleichzeitigen Bewegung der beiden Sensoren 25 und 25' entlang des Verfahrweges 24 würden entsprechend schrägliegende Filterstäbe 11 sehr schnell registriert werden. Die Sensoren 25 und 25' sind so ausgerichtet, dass sie parallel liegende Filterstäbe gleichzeitig erfassen. Auch in diesem Ausführungsbeispiel können entweder die Sensoren bewegt werden oder die Schragen.

Fig. 7c zeigt einen Schnitt entlang der Linie A-A aus Fig. 7a. Insbesondere ist auch der Laserstrahl 29, 29' der Sensoren 25, 25' dargestellt, der auf die Produktoberfläche bzw. die obersten Lagen der Produkte 11, 12 trifft und von einem Detektor 30 bzw. 30' aufgenommen wird. Je nach Verschiebung der Laserpunkte auf dem positionssensitiven Detektor 30 bis 30' kann auf einfache Art und Weise der Abstand des Sensors zur Oberfläche gemessen werden. Hierzu kann das Prinzip der Triangulation Verwendung finden.

Bei der Erfassung von querliegenden Produktstäben beispielsweise mit zwei Laserabstandssensoren 25 und 25' kann eine Art Wegbezug gebildet werden, bei dem der zurückgelegte Weg beispielsweise durch einen Inkrementaldrehgeber oder ein anderes Signal von Wegaufnehmern abgebildet wird. Wenn also ein Filterstab 11 quer liegt, kann einer der beiden Laserabstandssensoren 25, 25' ein Startsignal beispielsweise einer Zähleinheit bei Erfassen einen querliegenden Filterstabes 11 senden, und der zweite Laserabstandssensor 25, 25' ein Stoppsignal senden. Hierdurch kann die Wegdifferenz der beiden Laserabstandssensoren herausgefunden werden, und zwar über die Verfahrgeschwindigkeit der Laserabstandssensoren bzw. des Schragens 10 und die aufgenommene Zeitdifferenz oder aber über die Anzahl möglichst hochauflösender Impulse (hochauflösend im Hinblick auf die Zeit), die bei einer Triggerung des ersten und des zweiten Laserabstandssensors 25 und 25' Verwendung finden können. Die Anzahl der gezählten Impulse ist dann ein Maß für den absoluten Winkelversatz eines querliegenden Produktstabes. Entsprechend kann auch die Zeitdifferenz ein Maß hierfür sein. Es kann dann vorgesehen sein, eine Obergrenze für die Anzahl der Triggerimpulse bzw. die Zeit oder den Weg bzw. den Winkel des Produktstabes vorzusehen, um eine Klassifizierung des Fehlers der Befüllung in gut oder schlecht vorzunehmen. Hierbei kann die Klassifizierung je nach dem Produkt parametrierbar und damit einstellbar sein. Damit kann für jeden Filterstab bzw. jedes weitere Produkt erst ab einem vorher festlegbaren Versatzwinkel vom System ein Fehler ausgegeben werden.

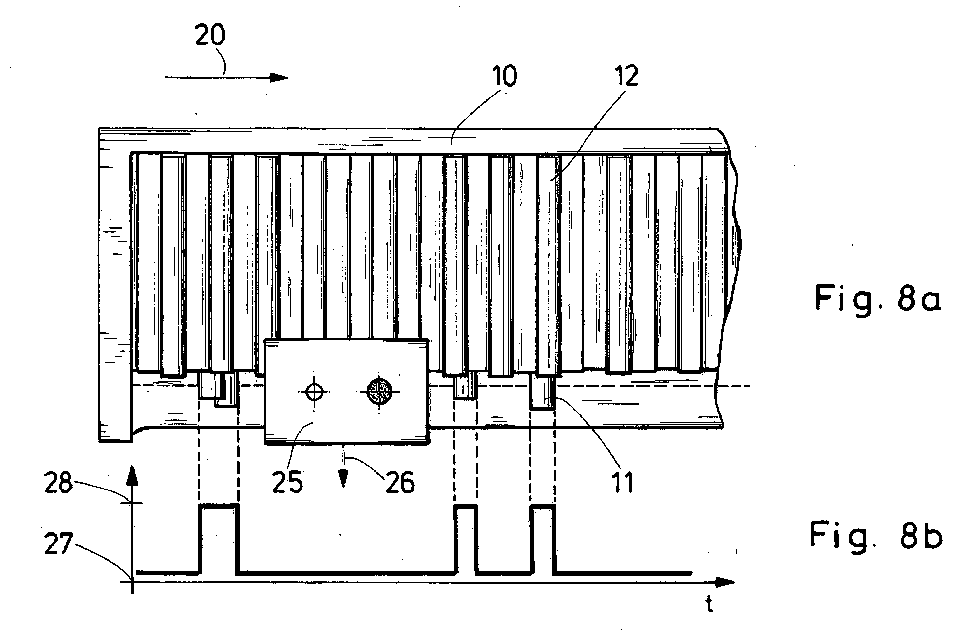

Fig. 8a zeigt eine weitere-Ausführungsform einer erfindungsgemäßen Befüllungsprüfvorrichtung bzw. eines Teils hiervon. Als Sensor dient in diesem Fall auch ein Laserabstandssensor 25, in den beispielsweise eine Auswerteeinheit integriert ist. Der Laserabstandssensor 25 dient dazu, hervorstehende Filterstäbe 11 zu detektieren. Durch starke Bewegungen wie Beschleunigung oder geometrische Anordnungen, bei denen sich die um einen Filterstab 11 herumliegenden anderen Filterstäbe 12 gegenseitig abstützen, so dass der in der Mitte liegende Filterstab 11 nicht geklemmt wird und somit frei liegend ist, kann es geschehen, dass ein entsprechender Filterstab 11 "herauswandert". Diese Filterstäbe können bei der weiteren Handhabung abbrechen, so dass entsprechend herausstehende Filterstäbe 11 nicht gewünscht sind.

Die schematische Draufsicht der Fig. 8a auf einen Teil eines Schragens 10, der mit entsprechenden Filterstäben 11 und 12 befüllt ist, deutet die Messmethode an. Der Sensor 25 wird relativ zum Schragen 10 entlang des Verfahrwegs 20 bewegt. Hierbei wird die Höhe des Sensors zu dem Boden bzw. dem Filterstab 11 gemessen. Ist der gemessene Abstand unterschiedlich zum Abstand des Sensors zum Boden des Schragens 10, wird ein Signal 26 erzeugt, das einem Wert 28 entspricht, nämlich außerhalb des Toleranzbereiches. Ein entsprechendes schematisches Diagramm des gemessenen Signals über der Zeit ist in Fig. 8b dargestellt.

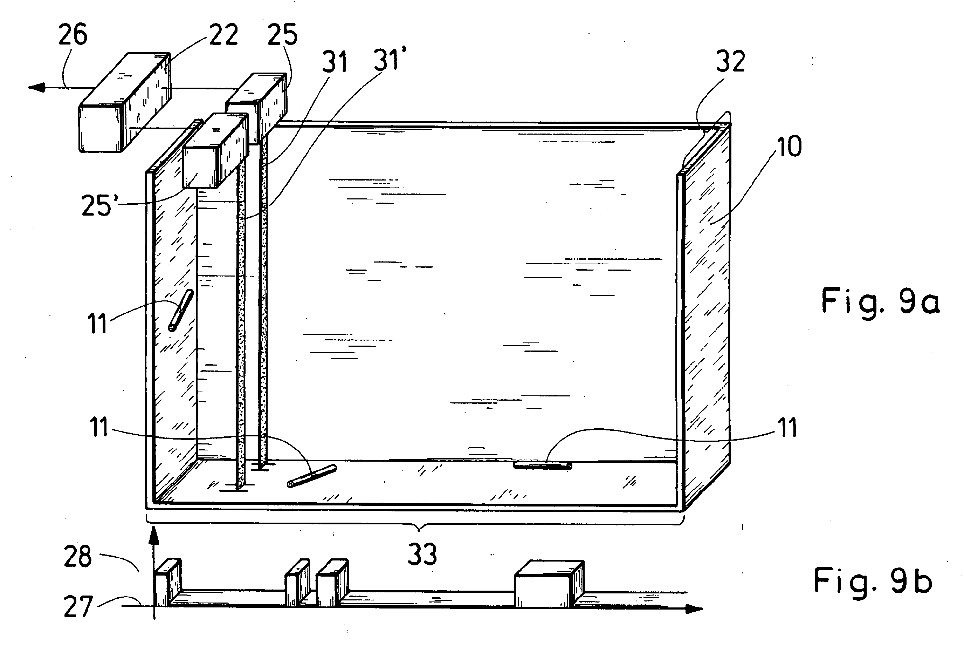

Schließlich ist in Fig. 9a schematisch eine weitere erfindungsgemäße Befüllungsprüfvorrichtung in einer weiteren Ausführungsform dargestellt. Die Befüllungsprüfvorrichtung kann hierbei ausgestaltet sein wie die gemäß Fig. 7, wobei in diesem Fall eine vollständige Entleerung eines Schragens 10 mittels der Laserabstandssensoren 25 und 25' festgestellt wird. Ein nicht vollständig entleerter Schragen 10 kann dadurch entstehen, dass durch statische Aufladung, Leimabsatz oder andere in- der Produktion verwendete Materialien wie beispielsweise Saccharin oder hineingefallene Produktstäbe 11 sowie gequetschte oder eingeklemmte Produktstäbe diese im Schrageninnenraum verbleiben können. In Fig. 9a sind drei Filterstäbe 11 nach der Entleerung verblieben, die entsprechend durch die Laserabstandssensoren entdeckt werden. Es ergibt sich ein schematisches Signal-über-Zeit-Diagramm gemäß Fig. 9b. Die Laserstrahlen sind hierbei vorzugsweise aufgefächert, um einen größeren Bereich abzudecken. Da der Abstand zwischen den Sensoren 25 und 25' und dem Schragenboden immer gleich ist, ist jede Abweichung von diesem Abstandswert ein Indiz für noch im Schragen befindliche Gegenstände. Es können zwei oder mehr Sensoren 25, 25' mit einer ODER-Funktion verknüpft sein, um die Bodenfläche mit einer ausreichenden Sicherheit zu überwachen.

Besonders bevorzugt bzw. einfach ist es, wenn die gleichen Sensoren 25 und 25' Verwendung finden wie gemäß dem Ausführungsbeispiel der Fig. 7, wobei es dann insbesondere bevorzugt ist, wenn der gefüllte Schragen und der entleerte Schragen am gleichen Ort jeweils gemessen bzw. überwacht werden.

Es ist auch von Vorteil, Sensoren mit einem speziell fokussierten Leuchtfleck bestimmter geometrischer Form zu verwenden. Es ist insbesondere von Vorteil, die Geometrie des Leuchtflecks rechteckig bis linienförmig auszuführen, um auch dünne Produktstäbe zu detektieren. Ein weiterer Vorteil der Linie ist die Möglichkeit der nahen Randabtastung des Schragens. Um die Messungen innerhalb des Schragens durchzuführen, können Sensoren wie beispielsweise Lichttaster verwendet werden, die die Schragenwände erfassen. Wird der Schragen unter dem Sensor bewegt, wird der Lichttaster so eingestellt, dass ein Triggersignal erzeugt wird, wenn beispielsweise die Schragenseitenwand erkannt wird. Damit wird sichergestellt, dass die vorstehend beschriebenen Messungen nur im zu überwachenden Raum aktivgeschaltet und deren Signale ausgewertet werden.

Sofern eine Anhaftung von stabförmigen Gegenständen an Schragenseitenwänden ausgeschlossen werden kann, ist eine Überwachung des Leerschragenbodens mit nur einem Sensor realisierbar. Dieses kann vorzugsweise ein Laserreflextaster sein. Dieser wird vorzugsweise so angeordnet, dass er frontseitig die Bodenfläche in der Tiefe auf das Vorhandensein von stabförmigen Gegenständen überprüft. Hierbei kann der Behälter verfahren werden oder der Sensor entlang des Behälters bewegt werden. Von der Tiefe her ist dann die Schragenrückwand als 0-Wert bzw. Nullstellung oder Bezugsabstand anzusehen.

Entsteht im Magazin einer Abfüllvorrichtung von stabförmigen Gegenständen eine querliegende Zigarette, ein querliegender Filterstab oder beispielsweise ein querliegender Filterstock, wobei dieses beispielsweise durch Entnahme von Zigaretten durch einen Operator in der Sichtstrecke, einen Querflieger im Auslauf oder einen Querflieger auf einem Verdrängerkörper usw. geschehen kann, so setzt sich dieser auf dem zu der Abfüllvorrichtung gehörenden Rüttelbalken fest und sorgt dafür, dass an dieser Stelle der Behälter, beispielsweise ein Schragen, nicht gefüllt wird. Infolgedessen fallen die stabförmigen Gegenstände bzw. Artikel im Schragen in die entstandene Lücke und es entsteht in diesem Bereich des Schragens ein unkontrolliertes Zusammenliegen von Zigaretten oder Filtern bzw. stabförmigen Artikeln.

Dieser Abfüllfehler zeigt eine Ansammlung nicht geordneter, nicht parallel liegender stabförmiger Artikel, die auch als "Nester" bezeichnet werden. Ein Fehler dieser Art wird bisher von keiner Sensorik erkannt. Jeder weitere Schragen würde außerdem auch schlecht abgefüllt werden. Der Fehler würde beispielsweise erst dann bemerkt werden, wenn der erste schlechte Schragen von der Hubbühne angehoben wird, so dass eine Bedienperson den Fehler beim manuellen Handling zum Umsetzen von der Hubbühne in den Schragenwagen oder einen von der Anmelderin unter dem Namen "Magomat" vertriebenen Schragenentleerer feststellt. In diesem Fall sind allerdings bereits zehn oder mehr Schragen abgefüllt worden. Handelt es sich hierbei um Standardformate, sind es also ca. vierzigtausend stabförmige Artikel. Um diesen Vorgang zu überwachen, haben sich Zigarettenhersteller einen Spiegel installiert, so dass der Bediener einer Zigarettenmaschine oder einer Filtermaschine den Abfüllvorgang durch den Spiegel betrachten kann. Allerdings wird dieser Fehler trotz allem durch eine Bedienperson eher selten rechtzeitig bzw. frühzeitig entdeckt.

Der durch derartige Fehler in seiner geordneten Anordnung der Produkte gestörte Schragen sollte nicht in einen Schragenentleerer wie dem von der Anmelderin vertriebenen "Magomat" dem Prozess wieder zugeführt werden. Einige Querflieger bzw. querliegende stabförmige Artikel im Schragen reichen im Schragenentleerer aus, um die gesamte Linie eine Zeitlang stillzulegen, da die stabförmigen Artikel sich im Magazin des Schragenentleerers unkontrolliert und chaotisch anordnen können und somit den weiteren Prozess erheblich stören können. Die Folge hiervon sind lange Stillstandszeiten durch Reinigung der Maschine und Ausschleusung von schlecht abgefüllten Schragen. Die schlecht abgefüllten Schragen können für die Produktion nicht verwendet werden. Aus diesem Grund entsteht ein Produktionsausfall.

Diese Problematik erweitert sich noch, wenn die Schragenhandhabung automatisiert wird. Gerade hierbei ist es wichtig, Fehler entsprechend frühzeitig zu erkennen, denn bei der Automatisierung mit Robotern entfällt regelmäßig die manuelle Kontrolle durch die Bediener.

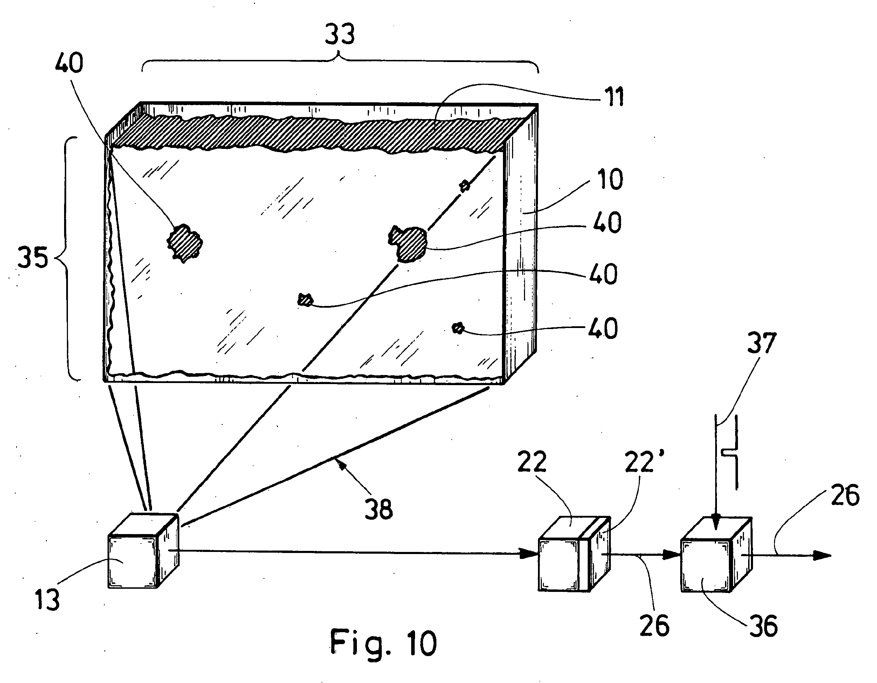

Fig. 10 zeigt eine schematische Ansicht einer Befüllungsprüfvorrichtung, die nicht gemäß der Erfindung ist, bei der entsprechende Befüllungsfehler in Form von Nestern 40 existieren. Im Schragen mit einer Höhe 35 und einer Breite 33 sind entsprechende Filterstäbe 11 angeordnet. Hierbei kann es sich anstelle der Filterstäbe 11 auch um fertige Zigaretten (mit oder ohne Filter) handeln. Mit einer Kamera 13 wird ein Bild der kompletten Frontansicht aufgenommen. Da der Abfüllfehler mit der Klassifizierung "Nester" sich optisch von normal abgefüllten Schragen unterscheidet, ist eine Fehlerdetektierung über ein Kamerasystem und entsprechende Beleuchtungseinrichtung, die nicht dargestellt ist, möglich.

Abfüllfehler in Form von "Nestern" weisen größere zusammenhängende Ansammlungen von gleichen Grauwertpixeln auf und sind damit eindeutig gegenüber Bildern von normal abgefüllten Schragen zu unterscheiden. Bei normal abgefüllten Schragen 10 gibt es entsprechende Ansammlungen nicht. Diese Bilder weisen eher eine homogenere Verteilung von schwarz/weiß Pixeln auf. Die Anzahl der Pixel und damit die Fehler-Flächengröße ist über eine Einstellung bzw. Parametrierung des Kamerasystems auswählbar.

Das Kamerasystem ist in seiner Auflösung und Brennweite so bestimmt, dass es die gesamte Vorderansicht des Schragens 10 in eine digitale Bildinformation umsetzt. Hierzu sind eine entsprechende Erfassungspyramide 38 und der Abstand der Kamera 13 zum Schragen 10 bzw. der Vorderansicht des Schragens 10 so eingestellt, dass die gesamte Vorderansicht aufnehmbar ist. Das Aufnahmeverfahren kann statisch erfolgen, also im Schragen- oder Kamerastillstand. Weiterhin ist-denkbar, dieses Verfahren auch bei Schragenbewegung einzusetzen, wenn der Schragen 10 mit definiertem Abstand an der Kamera 13 vorbei bewegt wird oder die Kamera 13 mit definiertem Abstand am Schragen 10 vorbei geführt wird.

Die Aufnahme wird durch ein Triggersignal mittels einer Steuerung initiiert, und zwar zu einem Zeitpunkt, in dem das zu betrachtende Objekt im Bildausschnitt des Kamerasystems sich befindet. Alternativ hierzu kann das Triggersignal 37 auch vorgesehen sein, um nur in dem Moment, in dem das Triggersignal auf einem Signal steht, das ein Vorhandensein das Vorhandensein eines zu betrachtenden Objektes im Bildausschnitt der Kamera 13 entspricht, das Bild der Kamera für eine Auswertung bzw. für die Weitergabe eines entsprechenden Signals 26 zur Verfügung steht.

Das Kamerabild wird über eine, vorzugsweise elektrische, Leitung einer Auswertevorrichtung 22 zugeführt, die eine Auswertevorrichtung 22' bzw. eine entsprechende Signalerzeugungseinheit 22' aufweist. Die Auswertevorrichtung 22' bzw. Signalerzeugungseinheit 22', die Bestandteil der Auswertevorrichtung 22 sein kann, erzeugt ein Signal 26, das ein binäres Signal 1 oder 0 bzw. true oder false sein kann und anzeigt, ob ein korrekt abgefüllter Schragen vorliegt oder eben kein korrekt abgefüllter Schragen. Das Signal 26 wird zu einer Steuervorrichtung 36 weitergegeben, in die das Triggersignal 37 eingeleitet wird. Das Signal 26 wird dann aus der Steuervorrichtung 36 weitergeleitet, wenn das Triggersignal 37 das Vorhandensein eines Schragens im Bildausschnitt des Kamerasystems bedeutet. Im anderen Fall wird das Signal 26 zurückgehalten.

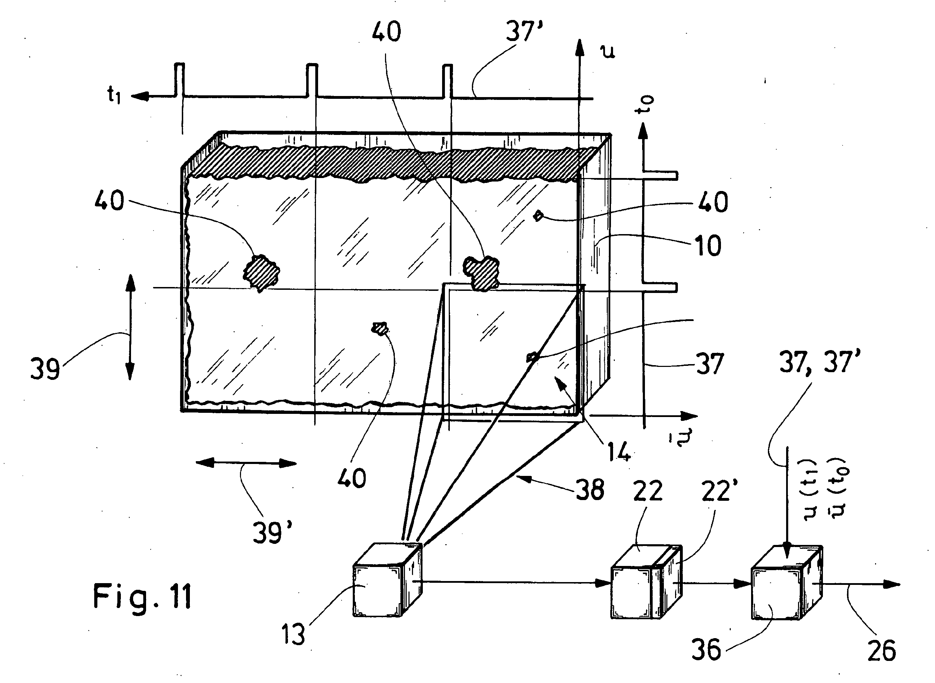

In Fig. 11 ist eine andere Ausführungsform einer Befüllungsprüfvorrichtung, die nicht gemäß der Erfindung ist, dargestellt, wobei im Unterschied zu der Fig. 10 das Kamerasystem-ausgebildet ist, um einen Abschnitt der Vorderansicht des Schragens abzubilden, der nur einem Teil der Vorderansicht entspricht. Es kann dann das Kamerasystem 13 bzw. die Kamera 13 oder der Schragen 10 entlang der Verfahrrichtung 39 oder 39' verfahren werden, um die weiteren fünf Abschnitte der Vorderansicht des Schragens 10 aufzunehmen. Hierdurch ergibt sich eine Vereinfachung, da mehrere einzelne sequenzielle Bilder nacheinander aufgenommen werden können. Es können kostengünstigere Kamerasysteme mit geringerer Auflösung zum Einsatz kommen. Eine mögliche Überlappung der aufgenommenen Bilder führt nicht zu einer Funktionsstörung, da bereits ein einziger Fehler zum Ausschluss des Schragens 10 führt. Das heißt, ist schon im ersten Bildabschnitt, der aufgenommen wurde, festgestellt worden, dass ein Fehler in der Befüllung vorliegt, kann der gesamte Schragen 10 ohne weitere Begutachtung bzw. Aufnahme von Bildern aussortiert werden. Je nach Bildgröße und nötiger Auflösung bzw. Maschinenumgebung (entsprechend dem Einbauraum), können auch mehrere Kameras 13 in sequenzieller Verschaltung die Aufgabe eines hochauflösenden Kamerasystems übernehmen. In Fig. 11 ist auch ein Triggersignal U (t₁) und U̅ (t₀) vorgesehen, um in der Steuervorrichtung 36 zum richtigen Zeitpunkt das entsprechende Signal 26 weitergeben zu können bzw. um eine entsprechende Auswertung zum richtigen Zeitpunkt vorzunehmen. Das oder die Triggersignal(e) 37, 37' können auch mit der Auswertevorrichtung 22 verbunden sein bzw. dieser zugeführt werden.

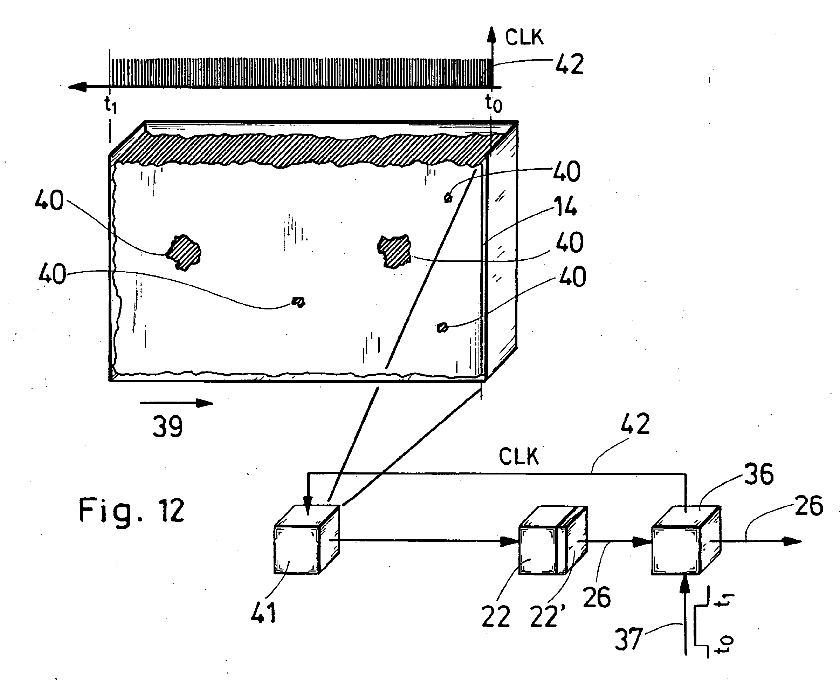

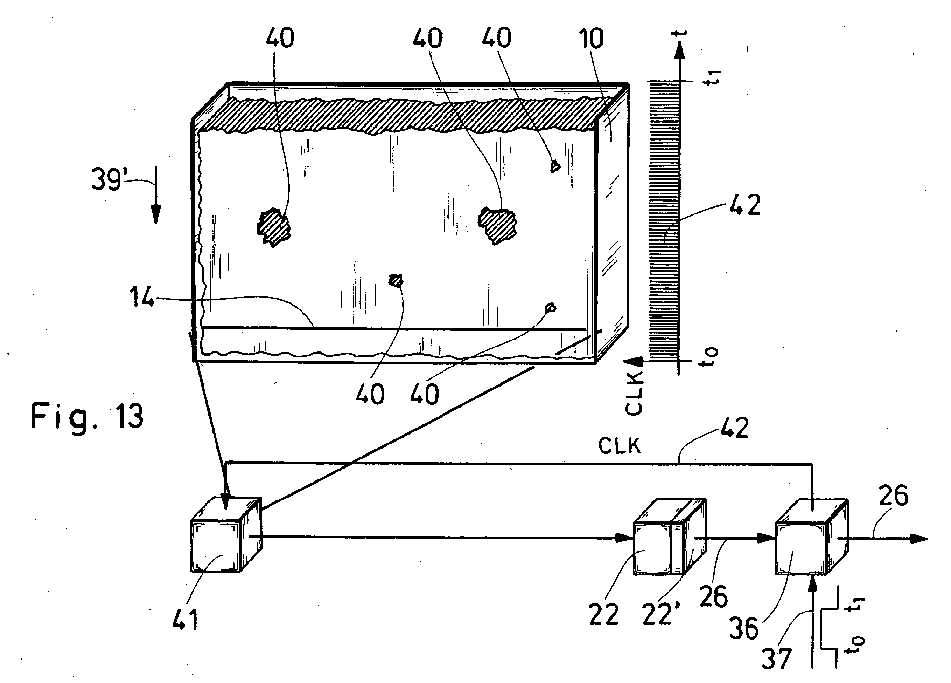

In Fig. 12 ist eine weitere schematische Darstellung einer Befüllungsprüfvorrichtung, die nicht gemäß der Erfindung ist, zu erkennen. Hierbei handelt es sich um eine besonders kostengünstige Ausführung. Wenn der Schragen 10 mit einer konstanten Geschwindigkeit vertikal oder horizontal frontseitig bewegt wird, im Fall der Fig. 12 entlang der Breite des Schragens 10 und in der Fig. 13 entlang der Höhe, kann auch eine Zeilenkarrrera, beispielsweise eine CCD-Zeile (CCD von Charged Coupled Device), zum Einsatz kommen. In diesem Fall wird mit einer schnellen Taktung (CLK) 42 jeweils eine Bildzeile aufgenommen und auf Nester 40 überprüft. Die Fotozeile 41 nimmt in Fig. 12 pro Takt bzw. Taktsignal 42 ein Bild entlang der Höhe der Vorderansicht des Schragens auf und in Fig. 13 ein Bild entlang der Breite. Hierzu ist die Steuervorrichtung 36 durch ein Triggersignal 37 in dem Zeitraum zwischen t₀ und t₁ auf aktiv geschaltet und es wird ein Taktsignal 42 der Fotozeile 41 zugeführt, um in dem Zeitraum von t₀ bis t₁ zu den jeweiligen Taktsignalen 42 entsprechende lineare Bilder aufzunehmen. Diese werden dann auf Nester 40 ausgewertet, und zwar in der Auswertevorrichtung 22. Liegt ein Nest vor, generiert die Auswertevorrichtung 22' bzw. die Signalerzeugungseinheit 22' ein Signal 26, das dem Vorliegen eines Nestes oder dem Nichtvorliegen eines Nestes 40 entspricht.

Um eine Unabhängigkeit gegenüber Tageslicht zu gewährleisten, wird vorzugsweise mit Infrarotlicht die Vorderseite des Schragens beleuchtet. Entsprechend kann auch Infrarotlicht bei den anderen Ausführungsformen der Erfindung auf die Oberseite des Schragens oder in den an sich entleerten Schragen geleuchtet werden. Es kann dann ein optischer Sperrfilter auf dem Kameraobjektiv aufgebracht werden, so dass der Spektralfarbenanteil des Tageslichts eliminiert werden kann. Um einen möglichst optimalen Kontrast zwischen guter und schlechter Abfüllung zu erzielen, ist vorzugsweise eine schräge Anordnung der Beleuchtung zur Frontseite des Schragens zu wählen, d.h., das infrarote Licht wird mit einem Winkel im Bereich von 45° bis 89° zur Normalen der Vorderansicht des Schragens 10 eingestrahlt bzw. zur Normalen der Oberseite des Schragens 10 für die Erfassung von Befüllungsfehlern in einer Draufsicht auf den Schragen 10. Die Beleuchtung kann nur für die Zeit der Kameraaufnahme eingeschaltet sein, um die Lebensdauer der Beleuchtungseinrichtung zu erhöhen. Es sollte zweckmäßigerweise außerdem eine Statuslampe den Betriebszustand der Infrarotlichtquelle anzeigen, so dass der Maschinenbediener bemerkt, wann die Infrarotlichtquelle leuchtet.

### Bezugszeichenliste

- 10: Schragen
- 11: Filterstab
- 12: Filterstab
- 13: Kamera
- 14: Erfassungsbereich
- 15, 15': Sensor
- 16: Schlitten
- 17: Schiene
- 18: Motor
- 20, 20', 20": Verfahrweg
- 21, 21': Schiene
- 22: Auswertevorrichtung
- 22': Signalerzeugungseinheit
- 23, 23': Füllhöhe
- 24: Verfahrweg
- 25, 25': Laserabstandssensor
- 26: Signal
- 27: im Toleranzbereich
- 28: außerhalb des Toleranzbereichs
- 29, 29': Laserstrahl
- 30, 30': Detektor
- 31, 31': Laserstrahl
- 32: Behältertiefe
- 33: Behälterbreite
- 34: Behälterkippvorrichtung
- 35: Behälterhöhe
- 36: Steuervorrichtung
- 37, 37': Triggersignal
- 38: Erfassungspyramide
- 39, 39': Verfahrrichtung
- 40: Nest
- 41: Fotozeile
- 42: Taktsignal

## Patentansprüche

1. Verfahren zur Prüfung der Befüllung eines Schragens (10) mit stabförmigen Artikeln (11, 12) der Tabak verarbeitenden Industrie, wobei der Schragen (10) zum kontinuierlichen Betrieb einer Maschine der Tabak verarbeitenden Industrie gegen einen weiteren Schragen (10) wechselbar ist sowie eine offene Oberseite und eine offene Vorderseite aufweist, wobei die Tiefe (32) des Schragens (10) wenigstens so groß ist wie die Länge eines stabförmigen Artikels (11, 12), mit den folgenden Verfahrensschritten:
- Erfassen wenigstens einer Eigenschaft des Inhalts des Schragens (10) und
- Vergleichen der wenigstens einen Eigenschaft mit einem, insbesondere vorgegebenen, Sollinhalt des Schragens (10), wobei bei einer Abweichung vom Sollinhalt, die größer ist als ein, insbesondere vorgegebener, Toleranzwert, ein Signal (26) erzeugt wird, das einer fehlerhaften Befüllung entspricht,
**dadurch gekennzeichnet, dass** eine der erfassten Eigenschaften des Inhalts des Schragens die Füllhöhe ist, und dass die Füllhöhe (23, 23') des Schragens von oberhalb der Artikel (11, 12) erfasst wird.

2. Verfahren nach Anspruch 1, **dadurch gekennzeichnet, dass** die oberste Lage oder die obersten Lagen der Artikel (11, 12) auf querliegende Artikel (11) geprüft wird oder werden.

3. Verfahren nach Anspruch 2, **dadurch gekennzeichnet, dass** vor der Erfassung der obersten Lage oder Lagen des Inhalts des Schragens (10) der Schragen (10) etwas gekippt wird.

4. Verfahren nach einem oder mehreren der Ansprüche 1 bis 3, **dadurch gekennzeichnet, dass** aus dem Inhalt des Schragens (10) herausstehende Artikel (11) erfasst werden.

5. Verfahren nach einem oder mehreren der Ansprüche 1 bis 4, **dadurch gekennzeichnet, dass** in dem Schragen (10) nach dem Entleeren des Schragens (10) verbliebene Artikel (11) erfasst werden.

6. Verfahren nach einem oder mehreren der Ansprüche 1 bis 5, **dadurch gekennzeichnet, dass** mittels einer Kamera (13) ein optisches Bild aufgenommen wird, das mit einem Sollbild verglichen wird.

7. Verfahren nach Anspruch 6, **dadurch gekennzeichnet, dass** mittels eines Kontrastbildes eine Linienorientierung aufgenommen wird.

8. Verfahren nach einem oder mehreren der Ansprüche 1 bis 7, **dadurch gekennzeichnet, dass** mittels eines Sensors (13, 15, 15', 25, 25'), insbesondere eines Tasters (15, 15'), insbesondere eines Ultraschalltasters oder eines optischen Tasters, über die Breite (33) des Schragens (10) ein Signalmuster erfasst wird und mit einem gespeicherten Signalmuster oder einem weiteren erfassten Signalmuster verglichen wird.

9. Verfahren nach einem oder mehreren der Ansprüche 1 bis 8, **dadurch gekennzeichnet, dass** wenigstens ein Laserabstandssensor (25, 25') Verwendung findet.

10. Verfahren nach Anspruch 9, **dadurch gekennzeichnet, dass** der Laserabstandssensor (25, 25') über die Breite (33) des Schragens (10) ein Signalmuster aufnimmt.

11. Verfahren nach Anspruch 9 oder 10, **dadurch gekennzeichnet, dass** zwei Laserabstandssensoren (25, 25') vorgesehen sind, die im Wesentlichen senkrecht zur Breite (33) des Schragens (10) nebeneinander angeordnet sind, wobei die mit den Laserabstandssensoren zu vorgebbaren Zeiten erfassten Abstände voneinander abgezogen werden.

12. Verfahren nach einem oder mehreren der Ansprüche 8 bis 11, **dadurch gekennzeichnet, dass** der Sensor (13, 15, 15', 25, 25') oder die Sensoren (13, 15, 15', 25, 25') über die Breite (33) des Schragens (10) bewegt wird oder werden, oder dass der Schragen (10) sich durch einen Erfassungsbereich des Sensors (13, 15, 15', 25, 25') oder der Sensoren (13, 15, 15', 25, 25') bewegt.

13. Befüllungsprüfvorrichtung für Schragen (10) zur Aufnahme von stabförmigen Artikeln (11, 12) der Tabak verarbeitenden Industrie, wobei der Schragen (10) zum kontinuierlichen Betrieb einer Maschine der Tabak verarbeitenden Industrie gegen einen weiteren Schragen (10) wechselbar ist sowie eine offene Oberseite und eine offene Vorderseite aufweist, mit einer Vorrichtung (13, 15, 15', 25, 25') zur Aufnahme (Aufnahmevorrichtung) wenigstens einer Eigenschaft des Inhalts des Schragens (10) mit einer Auswertevorrichtung (22, 36), wobei die Auswertevorrichtung (22, 36) ausgebildet ist, um die wenigstens eine Eigenschaft des Inhalts des Schragens (10) mit einem Sollinhalt des Schragens (10) zu vergleichen, wobei die Auswertevorrichtung (22, 36) eine Signalerzeugungseinheit (22') umfasst, die ausgebildet ist, um ein Fehlersignal (26) zu generieren, wenn eine Abweichung vom Sollinhalt vorliegt, die größer ist als ein, insbesondere vorgebbarer, Toleranzwert, wobei die Aufnahmevorrichtung (13, 15, 15', 25, 25') wenigstens einen Sensor (13, 15, 15', 25, 25') umfasst, mittels dessen entlang der Breite (33) und/oder der Höhe (35) des Schragens (10) ein Signalmuster aufnehmbar ist, **dadurch gekennzeichnet, dass** das Signalmuster mit einem gespeicherten Signalmuster oder einem zweiten von dem Sensor (13, 15, 15', 25, 25') oder einem zweiten Sensor (13, 15, 15', 25, 25') aufgenommenen Signalmuster in der Auswertevorrichtung vergleichbar ist, wobei der Sensor (13, 15, 15', 25, 25') oberhalb des Schragens (10) angeordnet ist.

14. Befüllungsprüfvorrichtung nach Anspruch 13, **dadurch gekennzeichnet, dass** als Aufnahmevorrichtung wenigstens eine Kamera (13) zur Aufnahme wenigstens eines Abschnitts der Vorderansicht und/oder wenigstens eines Abschnitts einer Draufsicht auf den Schragen (10) bzw. den im Schragen (10) befindlichen stabförmigen Artikeln (11, 12) vorgesehen ist.

15. Befüllungsprüfvorrichtung nach Anspruch 13, **dadurch gekennzeichnet, dass** die Aufnahmevorrichtung (13, 15, 15', 25, 25') eine Fotozeile umfasst, wobei die Fotozeile und/oder der Schragen (10) verfahrbar ist oder sind.

16. Befüllungsprüfvorrichtung nach Anspruch 14, **dadurch gekennzeichnet, dass** der Sensor (13, 15, 15', 25, 25') oder die Sensoren (13, 15, 15', 25, 25') auf einem Schlitten (16) im Wesentlichen parallel zur Breite (33) des Schragens (10) verfahrbar ist oder sind.

17. Befüllungsprüfvorrichtung nach Anspruch 16, **dadurch gekennzeichnet, dass** der Sensor (13, 15, 15', 25, 25') oder die Sensoren (13, 15, 15', 25, 25') quer zur Verfahrrichtung (20, 20', 20", 24) bewegbar sind.

18. Befüllungsprüfvorrichtung nach einem oder mehreren der Ansprüche 14 bis 17, **dadurch gekennzeichnet, dass** der Sensor (13, 15, 15', 25, 25') ein Abstandssensor, insbesondere ein Laserabstandssensor ist.

19. Befüllungsprüfvorrichtung nach einem oder mehreren der Ansprüche 14 bis 17, **dadurch gekennzeichnet, dass** der Sensor (13, 15, 15', 25, 25') ein Taster, insbesondere ein Lichttaster, Laserreflextaster oder ein Ultraschalltaster ist.

20. Befüllungsprüfvorrichtung nach einem oder mehreren der Ansprüche 14 bis 17, **dadurch gekennzeichnet, dass** der Sensor (13, 15, 15', 25, 25') eine optische Kamera ist.

21. Befüllungsprüfvorrichtung nach einem oder mehreren der Ansprüche 14 bis 20, **dadurch gekennzeichnet, dass** eine Behälterkippvorrichtung (34) vorgesehen ist.

## Claims

1. Process for checking the filling of a tray (10) with rod-shaped articles (11, 12) in the tobacco-processing industry, wherein the tray (10) can be replaced by another tray (10) for the continuous operation of a machine in the tobacco-processing industry and has an open top and an open front, wherein the depth (32) of the tray (10) is at least as great as the length of a rod-shaped article (11, 12), with the following process steps:
- detecting at least one property of the contents of the tray (10) and
- comparing the at least one property with an in particular preset nominal contents of the tray (10), wherein if there is a deviation from the nominal contents which is greater than an in particular preset tolerance value, a signal (26) corresponding to a defective filling is generated,
**characterised in that** one of the detected properties of the contents of the tray is the filling height, and that the filling height (23, 23') of the tray is detected from above the article (11, 12).

2. Process according to claim 1, **characterised in that** the topmost layer or topmost layers of the articles (11, 12) is or are checked for transverse articles (11).

3. Process according to claim 2, **characterised in that** before detection of the topmost layer or layers of the contents of the tray (10), the tray (10) is slightly tilted.

4. Process according to one or more of claims 1 to 3, **characterised in that** articles (11) protruding from the contents of the tray (10) are detected.

5. Process according to one or more of claims 1 to 4, **characterised in that** articles (11) remaining in the tray (10) after emptying the tray (10) are detected.

6. Process according to one or more of claims 1 to 5, **characterised in that** an optical image, which is compared with a nominal image, is recorded by means of a camera (13).

7. Process according to claim 6, **characterised in that** a line orientation is recorded by means of a contrast image.

8. Process according to one or more of claims 1 to 7, **characterised in that** a signal pattern is detected over the width (33) of the tray (10) by means of a sensor (13, 15, 15', 25, 25'), in particular a probe (15, 15'), in particular an ultrasonic probe or an optical probe, and is compared with a stored signal pattern or another detected signal pattern.

9. Process according to one or more of claims 1 to 8, **characterised in that** at least one laser clearance sensor (25, 25') is used.

10. Process according to claim 9, **characterised in that** the laser clearance sensor (25, 25') records a signal pattern over the width (33) of the tray (10).

11. Process according to claim 9 or 10, **characterised in that** two laser clearance sensors (25, 25'), which are arranged next to one another substantially perpendicular to the width (33) of the tray (10), are provided, wherein the clearances detected with the laser clearance sensors at presettable times are withdrawn from one another.

12. Process according to one or more of claims 8 to 11, **characterised in that** the sensor (13, 15, 15', 25, 25') or sensors (13, 15, 15', 25, 25') is or are moved over the width (33) of the tray (10), or that the tray (10) moves through a detection area of the sensor (13, 15, 15', 25, 25') or sensors (13, 15, 15', 25, 25').

13. Filling check device for trays (10) for recording rod-shaped articles (11, 12) in the tobacco-processing industry, wherein the tray (10) can be replaced by another tray (10) for the continuous operation of a machine in the tobacco-processing industry and has an open top and an open front, with a device (13, 15, 15', 25, 25') for recording (recording device) at least one property of the contents of the tray (10) with an evaluation device (22, 36), wherein the evaluation device (22, 36) is developed to compare the at least one property of the contents of the tray (10) with a nominal contents of the tray (10), wherein the evaluation device (22, 36) comprises a signal generation unit (22') which is developed to generate an error signal (26) if there is a deviation from the nominal contents which is greater than an in particular presettable tolerance value, wherein the recording device (13, 15, 15', 25, 25') comprises at least one sensor (13, 15, 15', 25, 25'), by means of which a signal pattern can be recorded along the width (33) and/or height (35) of the tray (10), **characterised in that** the signal pattern is comparable with a stored signal pattern or a second signal pattern recorded by the sensor (13, 15, 15', 25, 25') or a second sensor (13, 15, 15', 25, 25') in the evaluation device, wherein the sensor (13, 15, 15', 25, 25') is arranged above the tray (10).

14. Filling check device according to claim 13, **characterised in that** at least one camera (13) is provided as the recording device to record at least one section of the front view and/or at least one section of a top view onto the tray (10) or the rod-shaped articles (11, 12) found in the tray (10).

15. Filling check device according to claim 13, **characterised in that** the recording device (13, 15, 15', 25, 25') comprises a photocell, wherein the photocell and/or the tray (10) is/are movable.

16. Filling check device according to claim 14, **characterised in that** the sensor (13, 15, 15', 25, 25') or sensors (13, 15, 15', 25, 25') is or are movable on a slide (16) substantially parallel to the width (33) of the tray (10).

17. Filling check device according to claim 16, **characterised in that** the sensor (13, 15, 15', 25, 25') or sensors (13, 15, 15', 25, 25') are movable at right angles to the direction of travel (20, 20', 20", 24).

18. Filling check device according to one or more of claims 14 to 17, **characterised in that** the sensor (13, 15, 15', 25, 25') is a clearance sensor, in particular a laser clearance sensor.

19. Filling check device according to one or more of claims 14 to 17, **characterised in that** the sensor (13, 15, 15', 25, 25') is a probe, in particular a light probe, laser reflex probe or ultrasonic probe.

20. Filling check device according to one or more of claims 14 to 17, **characterised in that** the sensor (13, 15, 15', 25, 25') is an optical camera.

21. Filling check device according to one or more of claims 14 to 20, **characterised in that** a container tilting device (34) is provided.

## Revendications

1. Procédé pour contrôler le remplissage d'une caisse (10) par des articles en forme de bâtonnets (11, 12) de l'industrie de transformation du tabac, la caisse (10) pouvant, pour une exploitation continue d'une machine de l'industrie de transformation du tabac, être remplacée par une autre caisse (10), et présentant une face supérieure ouverte et une face avant ouverte, la profondeur (32) de la caisse (10) étant au moins aussi grande que la longueur d'un article en forme de bâtonnet (11, 12), ledit procédé comprenant les étapes suivantes :
- détection d'au moins une propriété relative au contenu de la caisse (10), et
- comparaison de la ou des propriétés à un contenu de consigne, en particulier prédéfini, de la caisse (10), un signal (26), qui correspond à un remplissage défectueux, étant produit dans le cas d'un écart par rapport au contenu de consigne qui serait supérieur à une tolérance en particulier prédéfinie,
**caractérisé en ce que** l'une des propriétés détectées relatives au contenu de la caisse est la hauteur de remplissage, et que la hauteur de remplissage (23, 23') de la caisse est détectée à partir d'un point situé au-dessus des articles (11, 12).

2. Procédé selon la revendication 1, **caractérisé en ce que** le contrôle porte sur la couche la plus supérieure ou les couches les plus supérieures des articles (11, 12), sur les articles disposés transversalement (11).

3. Procédé selon la revendication 2, **caractérisé en ce que**, avant la détection de la ou des couches les plus supérieures du contenu de la caisse (10), on bascule légèrement la caisse 10).

4. Procédé selon une ou plusieurs des revendications 1 à 3, **caractérisé en ce que** l'on détecte les articles (11) qui dépassent du contenu de la caisse (10).

5. Procédé selon une ou plusieurs des revendications 1 à 4, **caractérisé en ce que** l'on détecte les articles (11) restant dans la caisse (10) une fois la caisse (10) vidée.

6. Procédé selon une ou plusieurs des revendications 1 à 5, **caractérisé en ce que**, à l'aide d'une caméra (13), on enregistre une image optique, qui est comparée à une image de consigne.

7. Procédé selon la revendication 6, **caractérisé en ce qu'**une orientation de lignes est enregistrée à l'aide d'une image des contrastes.

8. Procédé selon une ou plusieurs des revendications 1 à 7, **caractérisé en ce que**, à l'aide d'un capteur (13, 15, 15', 25, 25'), en particulier d'un palpeur (15, 15'), en particulier d'un palpeur à ultrasons ou d'un palpeur optique, on détecte un modèle de signal sur la largeur (33) de la caisse (10), et on le compare à un modèle de signal mémorisé ou à un autre modèle de signal détecté.

9. Procédé selon une ou plusieurs des revendications 1 à 8, **caractérisé en ce qu'**on utilise au moins un capteur de distance laser (25, 25').

10. Procédé selon la revendication 9, **caractérisé en ce que** le capteur de distance laser (25, 25') enregistre un modèle de signal sur la largeur (33) de la caisse (10).

11. Procédé selon la revendication 9 ou 10, **caractérisé en ce que** deux capteurs de distance laser (25, 25') sont prévus, qui pour l'essentiel sont disposés l'un à côté de l'autre perpendiculairement à la largeur (33) de la caisse (10), les distances détectées à des moments prédéfinissables à l'aide des capteurs de distance laser étant déduites l'une de l'autre.

12. Procédé selon une ou plusieurs des revendications 8 à 11, **caractérisé en ce que** le capteur (13, 15, 15', 25, 25') ou les capteurs (13, 15, 15', 25, 25') sont déplacés sur la largeur (33) de la caisse (10), ou **en ce que** la caisse (10) est déplacée à travers une zone de détection du capteur (13, 15, 15', 25, 25') ou des capteurs (13, 15, 15', 25, 25').

13. Dispositif de contrôle du remplissage de caisses (10) destinées à recevoir des articles en forme de bâtonnets (11, 12) de l'industrie de transformation du tabac, la caisse (10) pouvant, pour une exploitation continue d'une machine de l'industrie de transformation du tabac, être remplacée par une autre caisse (10), et présentant une face supérieure ouverte et une face avant ouverte, comportant un dispositif (13, 15, 15', 25, 25') destiné à enregistrer (dispositif d'enregistrement) au moins une propriété relative au contenu de la caisse (10) à l'aide d'un dispositif d'évaluation (22, 36), le dispositif d'évaluation (22, 36) étant configuré pour comparer au moins une propriété relative au contenu de la caisse (10) à un contenu de consigne de la caisse (10), le dispositif d'évaluation (22, 36) comprenant une unité génératrice de signal (22'), destinée à générer un signal d'erreur (26) quand il y a par rapport au contenu de consigne un écart supérieur à une valeur de tolérance en particulier prédéfinissable, le dispositif d'enregistrement (13, 15, 15', 25, 25') comprenant au moins un capteur (13, 15, 15', 25, 25'), à l'aide duquel un modèle de signal peut être enregistré sur la largeur (33) et/ou la hauteur (35) de la caisse (10), **caractérisé en ce que** le modèle de signal peut être comparé, dans le dispositif d'évaluation, à un modèle de signal mémorisé ou à un deuxième modèle de signal enregistré par le capteur (13, 15, 15', 25, 25') ou un deuxième capteur (13, 15, 15', 25, 25'), le capteur (13, 15, 15', 25, 25') étant disposé au-dessus de la caisse (10).

14. Dispositif de contrôle du remplissage selon la revendication 13, **caractérisé en ce que**, en tant que dispositif d'enregistrement, au moins une caméra (13) est prévue pour enregistrer au moins un segment de la vue de face et/ou au moins un segment d'une vue de dessus de la caisse (10) ou des articles en forme de bâtonnets (11, 12) se trouvant dans la caisse (10).

15. Dispositif de contrôle du remplissage selon la revendication 13, **caractérisé en ce que** le dispositif d'enregistrement (13, 15, 15', 25, 25') comprend une cellule photoélectrique, la cellule photoélectrique et/ou la caisse (10) étant mobiles.

16. Dispositif de contrôle du remplissage selon la revendication 14, **caractérisé en ce que** le capteur (13, 15, 15', 25, 25') ou les capteurs (13, 15, 15', 25, 25') sont ou peuvent être déplacés sur un coulisseau (16) essentiellement parallèle à la largeur (33) de la caisse (10).

17. Dispositif de contrôle du remplissage selon la revendication 16, **caractérisé en ce que** le capteur (13, 15, 15', 25, 25') ou les capteurs (13, 15, 15', 25, 25') sont mobiles perpendiculairement à la direction du déplacement (20, 20', 20", 24).

18. Dispositif de contrôle du remplissage selon l'une des revendications 14 à 17, **caractérisé en ce que** le capteur (13, 15, 15', 25, 25') est un capteur de distance, en particulier un capteur de distance laser.

19. Dispositif de contrôle du remplissage selon une ou plusieurs des revendications 14 à 17, **caractérisé en ce que** le capteur (13, 15, 15', 25, 25') est un palpeur, en particulier un palpeur optique, un palpeur reflex laser ou un palpeur à ultrasons.

20. Dispositif de contrôle du remplissage selon une ou plusieurs des revendications 14 à 17, **caractérisé en ce que** le capteur (13, 15, 15', 25, 25') est une caméra optique.

21. Dispositif de contrôle du remplissage selon une ou plusieurs des revendications 14 à 20, **caractérisé en ce qu'**est prévu un dispositif de basculement de la caisse (34).
